# EUROPEAN PATENT APPLICATION

(11) **EP 4 763 373 A1**
(43) Date of publication of application: **24.06.2026**
(21) Application number: 24931119.2
(22) Date of filing: 21.11.2024
(51) Int. Cl.: B21D 51/26, G01D 5/18, H01M 10/04

(54) **APPARATUS AND METHOD FOR MONITORING ABRASIVENESS OF ROTARY FORMING TOOL FOR BATTERY CAN**

(30) Priority: 20.03.2024 KR 20240038715
(71) Applicant: LG Energy Solution, Ltd., Seoul 07335 (KR)
(72) Inventor: PARK, Hyeonjun, Daejeon 34122 (KR); OH, Kyungteak, Daejeon 34122 (KR); JEONG, Seokhun, Daejeon 34122 (KR)
(74) Representative: Goddar, Heinz J.
(86) International application number: PCT/KR2024/018555
(87) International publication number: WO 2025/198121

(57) **Abstract**

Provided is an apparatus capable of monitoring the abrasiveness of a forming tool for applying pressure to a battery can in the radial direction of the battery can along the circumferential direction thereof while rotating the battery can, to perform plastic working of the battery can in the radial direction thereof. The apparatus comprises: a can table installed to be rotatable about the central axis thereof; a process tool which is installed to be rotatable about a predetermined rotational center, is installed to be movable in a direction in which the process tool approaches or moves away from a can installed on the can table, and has a processing surface provided around the rotational center; a pressure sensor pressurized by the processing surface and measuring a pressure distribution; and a monitoring unit for calculating information related to a profile of the processing surface from the pressure distribution.

## Description

### [TECHNICAL FIELD]

This application claims the benefit of priority based on Korean Patent Application No. 10-2024-0038715 filed on March 20, 2024, entire content disclosed in the document of the patent applications is included as a part of this specification.

The present invention relates to a wear monitoring device and method of a rotary forming processing tool for a battery can. More specifically, the present invention relates to a device and method of monitoring the wear level of a forming processing tool that rotates a battery can and applies pressure in radial direction along circumferential direction of the battery can to plastically process the battery can in radial direction.

### [BACKGROUND ART]

A cylindrical battery is manufactured by accommodating an electrode assembly wound in a jelly-roll form within a metal can, and then performing a forming process near the open end of the side wall member of the can. The forming process includes a beading process in which the open end of the side wall member of the can is plastically processed to be recessed radially inward. In addition, the forming process further includes, after the beading process, a crimping process, which bends the open end of the can radially inward.

The beading and crimping processes are performed by rotating the can containing the electrode assembly, moving the processing tool close to the can from the radial outer side of the can, and plastically deforming the can along the circumferential direction of thereof.

During the beading and crimping processes, not only does the battery can rotate, but the processing tool also rotates. The peripheral surfaces of the can and the processing tool are in contact with each other and rotate in rolling motion to minimize scratches on the can surface.

During the beading and crimping processes, the battery can may rotate to drive while the processing tool is driven to rotate. Conversely, the processing tool may rotate to drive while the battery can is driven to rotate. Furthermore, both the battery can and the processing tool may rotate to drive.

During the beading and crimping processes, the processing tool wears. When the processing tool wears out and the beading and crimping processes do not follow the design, defects are more likely to occur in subsequent processes. For example, the beading area is relatively vulnerable due to the large amount of forming involved. Therefore, when the processing exceeds the design range, side surface damage (side rupture) increases during thermal runaway. Furthermore, when the beading process or crimping process falls short of the design range, the sealing force between the cap covering the open end of the can and the can may weaken, or defects may occur when welding the current collecting plate of the electrode assembly to the beading area.

Conventionally, battery cans subjected to beading process or crimping process are imaged using vision to determine processing tool wear and wear levels. However, such method indirectly estimated processing tool wear through the shape of the processing area, making it difficult to accurately determine the wear level of the processing tool.

### [DISCLOSURE]

### [TECHNICAL PROBLEM]

In order to solve above-described problems, it is an object of the present invention to provide a battery can processing device and processing method capable of accurately measuring or identifying the wear level of a processing tool.

It is an object of the present invention to provide a battery can processing device and processing method capable of measuring the wear level of a processing tool during each forming process.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

During the can machining process, the outer circumferential surface of a processing tool that rolls while applying pressure radially inward to the can forms a processing surface. The processing surface has a constant profile along the circumferential direction and continuously rolls by being in contact with the portion to be processed to process the portion to be processed. Consequently, wear of the processing surface also progresses evenly along the circumferential direction. The present invention was derived based on the characteristic of the processing tool that the profile of the processing surface, measured at any position along the circumferential direction, is constant throughout the entire circumferential direction.

In order to solve above-described problems, the present invention may be applied to a can processing device or processing method wherein plastic deformation is continuously performed along the circumferential direction of the can while rotating a cylindrical can for secondary batteries.

The can is plastically deformed by the force applied by the processing tool.

The processing tool rotates, and the can is plastically deformed.

The processing tool can rotate with the can in rolling motion.

The processing tool may press the can radially inward.

The processing tool and the can may rotate with each other in rolling motion.

During the process, the outer circumferential surface of the processing tool and the outer circumferential surface of the can may rotate with each other in rolling motion.

One of the processing tool and the can may rotate to drive, and the other may be driven to rotate by being in contact.

Both the processing tool and the can may rotate to drive.

The processing tool may be a beading knife for processing beading on the side surface of the side wall member.

The processing device may further include a head gripping a front end of the side wall member of the can.

The processing device may further include a support roller provided opposite to a beading knife with a head interposed therebetween.

The processing tool may include a crimping roller processing a crimped portion at a front end of the side wall member.

The processing device may include a can table where the can is rotatably installed about a center axis thereof.

The processing tool is rotatably installed about a predetermined rotation center and movable toward or away from the can installed on the can table.

The processing tool is provided with a processing surface around the rotation center.

The processing device includes a pressure sensor pressed by the processing surface and measuring a pressure distribution.

The processing tool may move from a standby position to a processing position to plastically process the can and retract from the processing position to the standby position after plastic processing is completed.

The pressure sensor may be installed at a position where the pressure sensor is pressed by the processing surface when the processing tool is in the standby position.

The processing tool may be disposed between the can and the pressure sensor.

The pressure sensor may include an electronic pressure-sensitive paper measuring the pressure distribution in real time and quantifying and visualizing the pressure distribution as numerical data.

The electronic pressure-sensitive paper may provide a two-dimensional pressure-sensitive surface and output a two-dimensional pressure distribution detected on the two-dimensional pressure-sensitive surface.

The two-dimensional pressure-sensitive surface may be disposed to intersect a moving direction of the processing tool.

The two-dimensional pressure-sensitive surface may be arranged in a plane shape.

The two-dimensional pressure-sensitive surface and the moving direction of the processing tool may be perpendicular.

The processing device may include a monitoring unit generating information related to a profile of the processing surface from the pressure distribution.

The monitoring unit may extract a maximum pressure distribution among pressure distributions arranged in a direction parallel to the rotation center of the processing tool and generate the information related to the profile of the processing surface.

The monitoring unit may predict the wear level of the processing tool from the generated profile information of the processing surface of the processing tool.

The can processing method according to the present invention includes: bringing a processing tool in a standby position close to a can.

The can processing method includes: plastically deforming the can continuously in a circumferential direction of the can to performing a forming process by rotating the can and the processing tool in rolling motion while applying pressure radially inward to the can by the processing tool.

The can processing method includes: returning the processing tool to the standby position after the forming process is completed.

The can processing method includes: measuring a pressure distribution by applying pressure to a pressure sensor with a processing surface provided on a circumferential surface of the processing tool in the standby position.

The can processing method includes: generating profile information of the processing surface of the processing tool based on the pressure distribution and determining a wear level of the processing tool based on the profile information.

The can processing method includes: measuring the pressure distribution by an electronic pressure-sensitive paper.

The can processing method includes: extracting a maximum pressure distribution among pressure distributions arranged in a direction parallel to a rotation center of the processing tool to generate information related to a profile of the processing surface and determining the wear level based on the information.

### [ADVANTAGEOUS EFFECTS]

According to the embodiment, the pressure sensor is configured to be pressed by the outer circumferential surface of the processing tool stationary at the standby position, and the profile of the outer circumferential surface of the processing tool may be calculated from the measured pressure distribution.

According to the present invention, since electronic pressure-sensitive paper having a sensing surface substantially perpendicular to the direction in which the processing tool returns to the standby position may be used, the service life of the electronic pressure-sensitive paper may be further extended.

According to the present invention, since the wear level is monitored by detecting the profile of the processing surface of the processing tool between each processing operation, the defect rate in processing may be further reduced.

According to the processing tool wear monitoring device and method of the present invention, monitoring of the wear level of the processing tool does not delay processing at all.

The processing tool wear monitoring device and method of the present invention may be additionally applied to conventional inspection methods, such as vision inspection, without any disruption or influence. Thus, defect inspection that cannot be performed with vision alone and also verification of the vision itself are possible.

The present invention is highly advantageous for application to processes in which the forming tool rotates and thus maintains a uniform wear level in the circumferential direction.

In addition to the advantageous effects described above, specific effects of the present invention will be described further while describing specific details of the present invention.

### [BRIEF DESCRIPTION OF DRAWINGS]

FIGS. 1 to 3 are perspective views, front views and front cross-sectional views of a can processing device in a standby state according to the present invention.
FIG. 4 is a front cross-sectional view illustrating a can table shown in FIG. 3in elevated position.
FIG. 5 is a front cross-sectional view illustrating ahead shown in FIG. 4in the lowered position.
FIG. 6 is a front cross-sectional view illustrating a processing tool and a support roller shown in FIG. 5 approaching an outer circumference of an upper end portion of a battery can at the beginning of a beading process.
FIG. 7 is a front cross-sectional view illustrating the processing tool and the support roller shown in FIG. 6 retracted and returned to the standby position after the beading process is completed.
FIG. 8 is a front cross-sectional view illustrating the can table and the head shown in FIG. 7 in the lowered and elevated positions, respectively.
FIG. 9 is a perspective view illustrating FIG. 8.
FIG. 10 is a perspective view illustrating an outer circumferential surface of the processing tool in the standby position applying pressure to electronic pressure-sensitive paper.
FIG. 11 is a plan view illustrating the outer circumferential surface of the processing tool of FIG. 10.
FIG. 12 is a front view illustrating the outer circumferential surface of the processing tool of FIG. 10.
FIG. 13 is a schematic diagram illustrating a pressure distribution arranged parallel to a rotation center of the processing tool.
FIG. 14 is a flowchart of a can processing method.

### [DESCRIPTION OF REFERENCE NUMERALS]

10: can processing device
20: support member
23: table elevating guide
24: pin elevating guide
25: forming block guide
26: support block guide
30: can table
40: head
41: spindle
42: elevating pin
45: head drive unit
46: motor
47: drive gear
48: driven gear
50: processing tool
51: forming block
52: beading knife
53: processing surface (profile)
p1: standby position
p2: processing position
60: support roller
61: support block
70: pressure sensor
71: electronic pressure-sensitive paper
80: monitoring unit
90: can
91: side wall member
92: bottom member

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or below lower surface) with another element interposed therebetween."

Additionally, when an element is described as being "connected to," "coupled to," or "joined to "another element, it should be understood that the element may be "directly connected to," "directly coupled to," or "directly joined to" another element, or the element may be "connected to," "coupled to," or " joined to" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Hereinafter, preferred embodiments of the present invention will be described in detail with reference to the accompanying drawings.

In the description of the embodiments, "axial direction" refers to "a direction parallel to the core axis of the electrode assembly", and "radial direction" refers to "a direction toward or away from the axis," and "circumferential direction" refers to "a direction surrounding the axis."

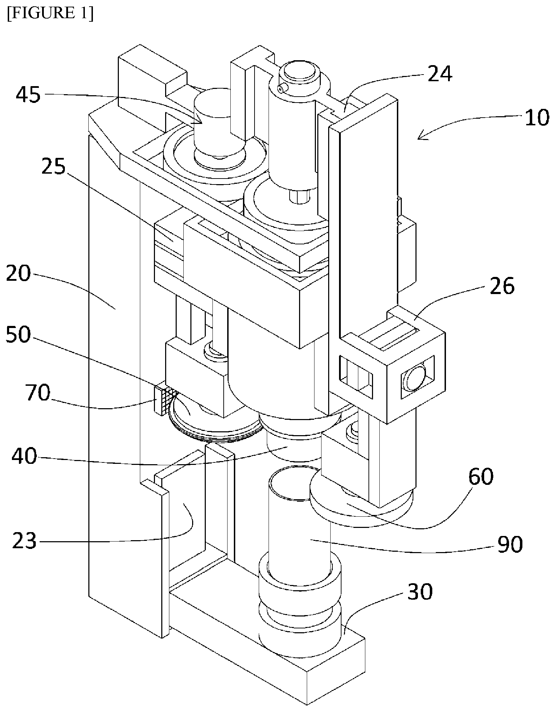

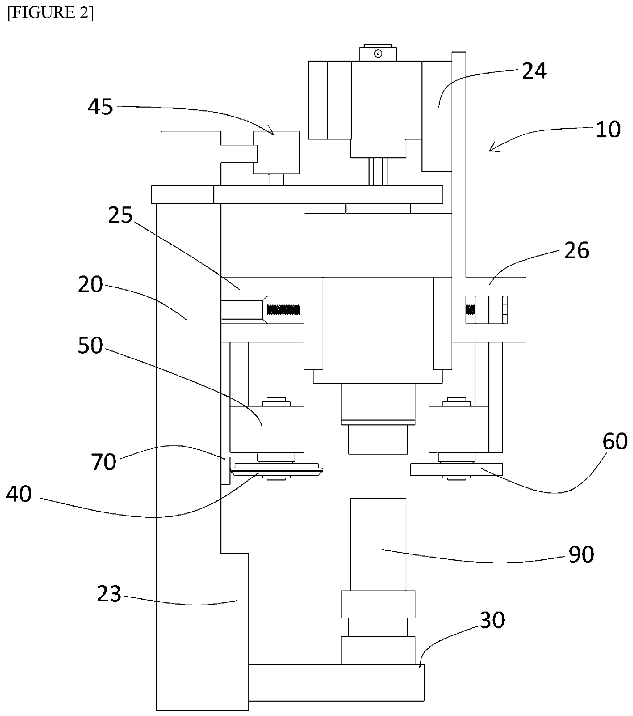

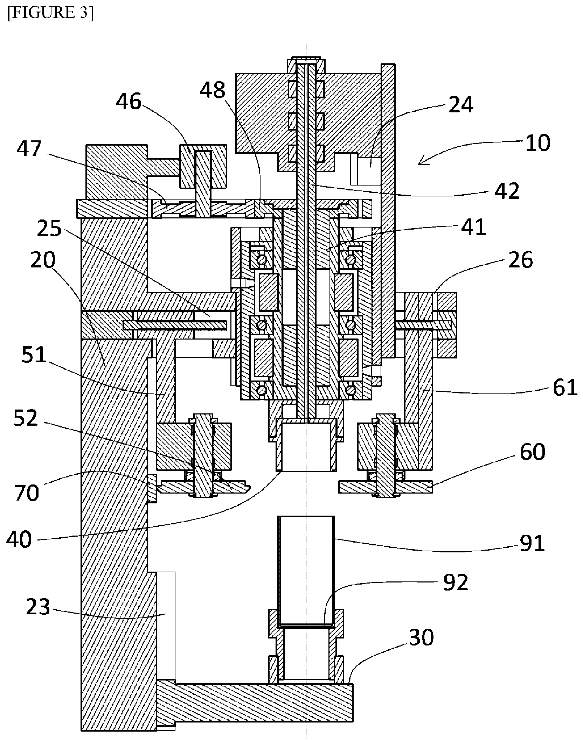

Referring to FIGS. 1 to 9, a can processing device 10 according to the embodiment includes a support member 20 that supports a cylindrical can 90 to be processed and a processing tool 50 that processes the can 90.

In one embodiment, the can processing device 10 may be a beading device that performs a beading process on a portion near the open end of a side wall member 91 of the can 90. In another embodiment, the can processing device 10 may be a crimping device that performs a crimping process wherein the open end of the side wall member 91 of the can 90 is crimped radially inward. In all of these, processing is performed while the processing tool 50 and the can 90 are in mutual rolling contact.

In the embodiment, a beading device is exemplified as the can processing device 10. However, the present disclosure is not limited to a beading device, and it is apparent that the present invention may be applied to other devices wherein a forming process is performed while a processing tool 50 and a can 90 are in mutual rolling contact.

The can processing device 10 includes a can table 30 that supports the can 90. The can table 30 grips a bottom member 92 of the can 90 and rotatably supports the can 90. The can 90 is gripped by the can table 30 in a manner that the bottom member 92 faces downward and the open end of the side wall member 91 faces upward.

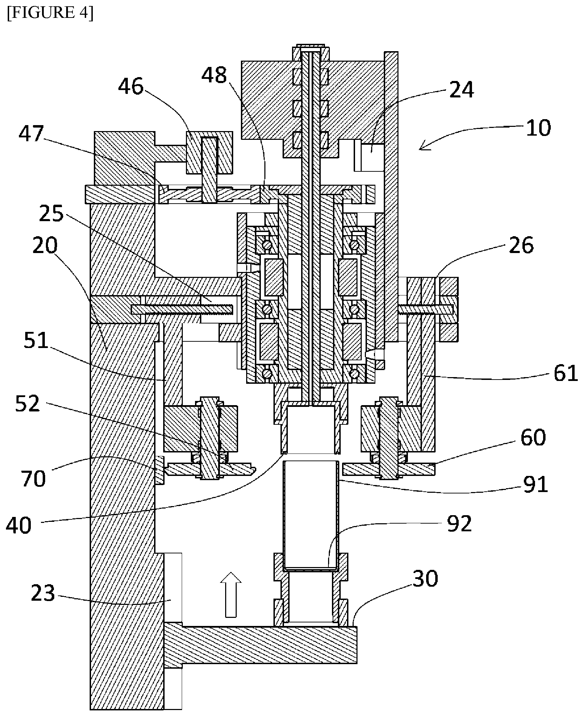

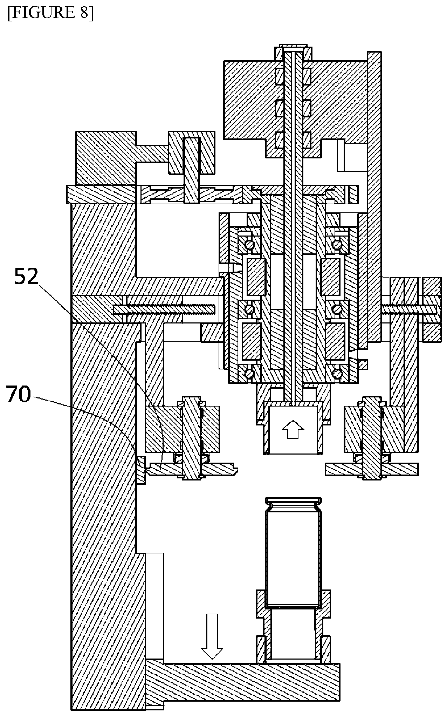

The support member 20 includes a table elevating guide 23 that guides the can table 30 to be movable in vertical direction (axial direction). As shown in FIG. 4, when the can table 30 is elevated, the can 90 is moved to the processing position, and as shown in FIG. 8, when the can table 30 is lowered, the can 90 is retracted from the processing position.

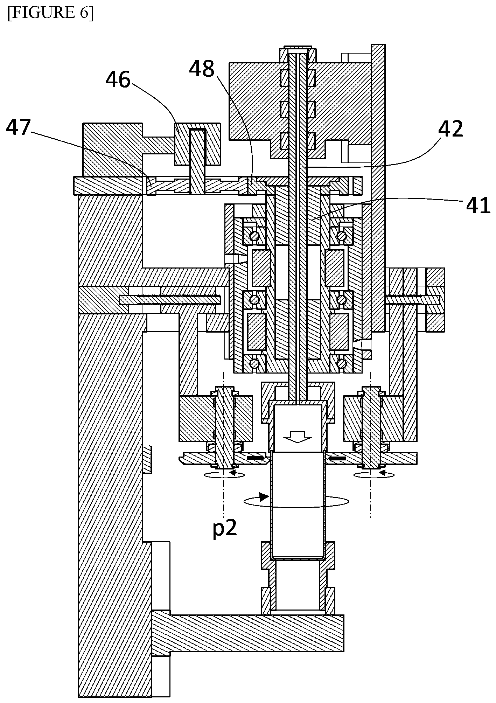

The can processing device 10 includes a head 40 that supports the open end of the side wall member 91 of the can 90 in the axial direction. As shown in FIG. 6, the head 40 may support and presses the can 90 in the axial direction, and drive the can 90 to rotate.

The head 40 includes a spindle 41 that rotates the head 40 and an elevating pin 42 that is rotationally constrained to the spindle 41 and slidable in axial direction.

According to the embodiment, the spindle 41 may be rotationally driven by a motor 46. A driven gear 48 that rotates together with the spindle 41 is provided at the upper end portion of the spindle 41. The driven gear 48 is engaged with a drive gear 47, and the motor 46 rotates the drive gear 47 to rotate the spindle 41. However, the rotational drive structure of the spindle 41 is not limited thereto.

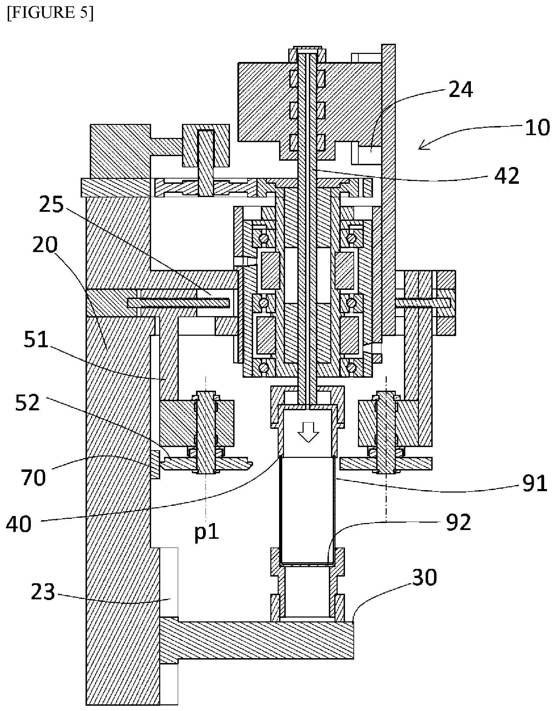

Referring to FIGS. 5, 6, and 8, the elevating pin 42 is elevated by a separate elevation driving unit. Accordingly, the lower end portion of the elevating pin 42 may be elevated or lowered to apply pressure to or release pressure from the open end of the side wall member 91 of the can 90 in the axial direction, and the spindle 41 may rotate the can 90 engaged with the elevating pin 42 and the lower end portion of the elevating pin 42.

In the embodiment, a structure in which the head 40 rotates the can 90, and the processing tool 50, which will be described later, is radially in contact with and rotating with the can 90 in rolling motion is exemplified. However, as described above, whether the actuation is performed either through the head 40 or the processing tool 50, or both may be selected as necessary. In addition, the can 90 may also be rotated through the can table 30.

The support member 20 is provided with a pin elevating guide 24 that guides the elevation of the elevating pin 42. For example, the pin elevating guide 24 may be provided above the spindle 41. However, the position of the pin elevating guide 24 is not limited thereto.

The can processing device 10 includes the processing tool 50 that approaches the can 90 in radial direction and performs a forming process on the side wall member 91 of the can 90.

The processing tool 50 rotates in rolling motion while pressing the can 90 radially inward during the processing of the can 90, and the outer circumferential surface thereof forms a processing surface 53. The processing surface 53 has a constant profile along the circumferential direction and continuously makes rolling contact with the portion to be processed provided on the side wall member 91 of the can 90 to process the portion to be processed. Accordingly, the wear of the processing surface 53 also progresses evenly along the circumferential direction. That is, the processing surface 53 has a uniform profile along the circumferential direction. Accordingly, the profile of the processing surface 53 measured at any position of the processing tool 50 may represent the profile of the processing surface 53 of the processing tool 50.

As shown in FIG. 6, the processing tool 50 presses the side wall member 91 of the can 90 radially inward to plastically deform the side wall member 91.

The processing tool 50 and the can 90 rotate in rolling motion relative to each other, and during the processing, the outer circumferential surface of the processing tool 50 and the outer circumferential surface of the can 90 may rotate in rolling motion relative to each other.

Here, one of the processing tool 50 or the can 90 may rotate to drive, and the other may be driven to rotate by being in contact. Alternatively, both the processing tool 50 and the can 90 may rotate to drive.

In the embodiment, the processing tool 50 which is a beading knife 52 that processes beading on the side surface of the side wall member 91 is exemplified.

The support member 20 includes a forming block guide 25 that guides the processing tool 50 in radial direction as the processing tool 50 approaches or retracts from the can 90. In one embodiment, the forming block guide 25 is provided on one side of the spindle 41. However, the position of the forming block guide 25 is not limited thereto.

The beading knife 52 is guided by the forming block guide 25 and is rotatably installed on the forming block 51 configured to slide. The forming block 51 may slide, for example, by a linear motion guide.

For example, the linear motion guide may include a step motor capable of precisely regulating the sliding distance and position of the forming block 51. That is, the processing tool 50 may be transported by a transport device capable of precisely regulating or controlling the movement and position of the processing tool 50.

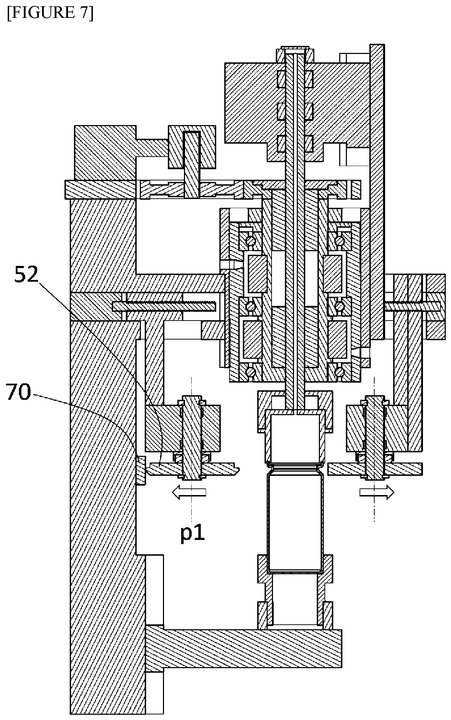

The processing tool 50 may slide between the standby position p1 shown in FIGS. 5 and 7 and the processing position p2 shown in FIG. 6 by the transport device.

The can processing device 10 may further include a support roller 60 provided on the opposite side of the beading knife 52 with the head 40 interposed therebetween. The support roller 60 approaches the can 90 in radial direction and supports the can 90 in radial direction. Accordingly, the support roller 60 supports the pressure of the beading knife 52 through the can 90 on the opposite side of the beading knife 52.

The support member 20 is provided with a support block guide 26 that guides the movement of the support roller 60 in radial direction toward or away from the can 90. In one embodiment, the support block guide 26 provided on the opposite side of the spindle 41 is exemplified. However, the position of the support block guide 26 is not limited thereto.

The support roller 60 is rotatably installed on a support block 61 that is guided and slides by the support block guide 26. The support block 61 may slide, for example, using a linear motion guide. The support roller 60 may also be transported by a transport device capable of precisely regulating or controlling the movement and position thereof.

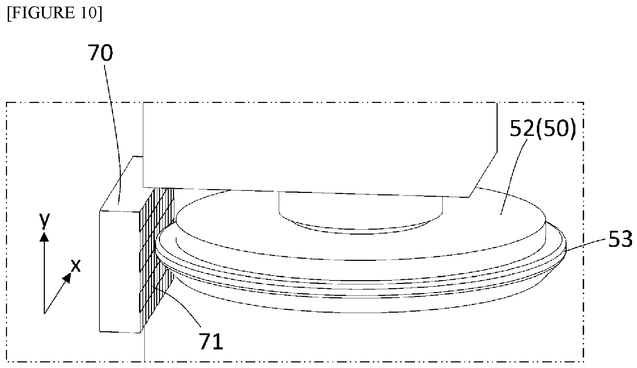

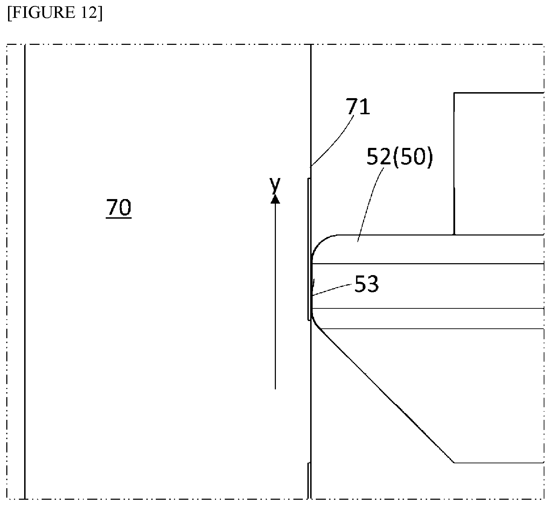

Referring to FIGS. 10 to 13, the can processing device 10 includes a pressure sensor 70 that measures the pressure distribution applied by the processing surface 53 of the processing tool 50.

The processing tool 50 may move from the standby position p1 to the processing position p2 to plastically process the can 90, and retract from the processing position p2 to the standby position p1 after the plastic processing is completed.

The pressure sensor 70 may be installed at a location where the pressure sensor 70 is pressed by the processing surface 53 when the processing tool 50 is in the standby position p1.

The processing tool 50 may be disposed in radial direction between the can 90 and the pressure sensor 70.

For example, the pressure sensor 70 may include an electronic pressure-sensitive paper 71 that measures the pressure distribution in real time, quantifies and visualizes the pressure distribution as numerical data. The electronic pressure-sensitive paper 71 may provide a two-dimensional (x, y) pressure-sensitive surface and output the two-dimensional pressure distribution detected on the two-dimensional pressure-sensitive surface.

The two-dimensional pressure-sensitive surface is arranged in a plane shape, and the two-dimensional pressure-sensitive surface may be arranged to intersect the moving direction of the processing tool 50, and preferably, the two-dimensional pressure-sensitive surface may be perpendicular to the moving directions of the processing tool 50.

The can processing device 10 may include a monitoring unit 80 that generates information related to the profile of the processing surface from the pressure distribution measured by the pressure sensor 70. The pressure sensor 70 may provide the pressure distribution applied by the processing tool 50 to the monitoring unit 80 as an electrical signal.

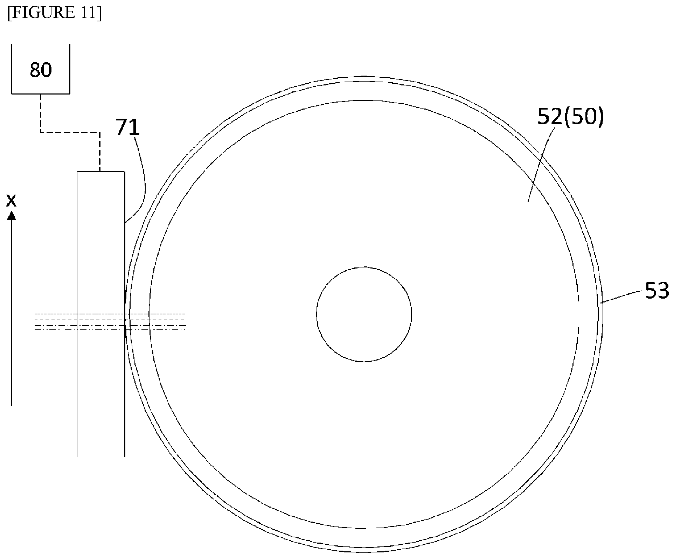

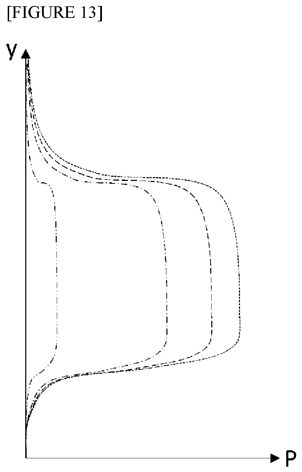

The monitoring unit 80 may extract the maximum pressure distribution among a plurality of pressure distributions (see FIG. 13) measured at different locations (see FIG. 11) in the widthwise direction x and arranged in a direction y parallel to the rotation center of the processing tool 50, and may generate information related to the profile of the processing surface.

The monitoring unit may predict the wear level of the processing tool 50 from the generated profile information of the processing surface of the processing tool 50.

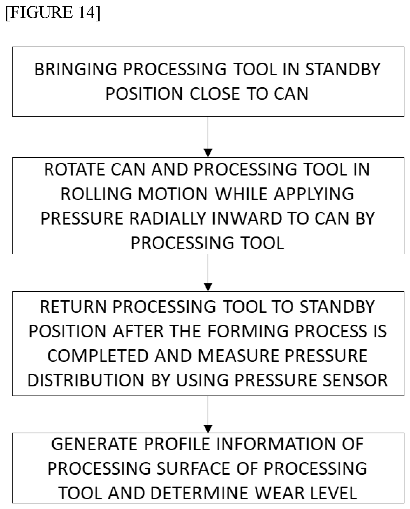

The processing process of the can processing device 10 according to the present invention will be described with reference to the preceding drawings and FIG. 14.

First, as shown in FIGS. 1 to 4, a can 90 requiring processing is supplied to the can table 30, and the can table 30, which supports the lower portion of the can 90, is elevated along the table elevating guide 23. Here, a beading knife 52 and a support roller 60, which is the processing tool 50, maintain a standby state at the standby position p1.

Next, as shown in FIG. 5, the elevating pin 42 is lowered to support the upper end portion of the can 90 with the head 40.

In this state, as shown in FIG. 6, the processing tool 50 in the standby position p1 is brought close to the can 90 in radial direction. For example, the processing tool 50 may be an elevating pin 42. When the processing tool 50 reaches the processing position p2, the head drive unit 45 is operated to rotate the head 40. Accordingly, with the can 90 and processing tool 50 rotating in rolling motion, the processing tool 50 is pressed radially inward toward the can 90, thereby continuously plastically deforming the can 90 along the circumferential direction of the can 90 to perform a forming process.

Next, after the processing is completed, as shown in FIG. 8, the processing tool 50 and support roller 60 are returned to the standby position p1.

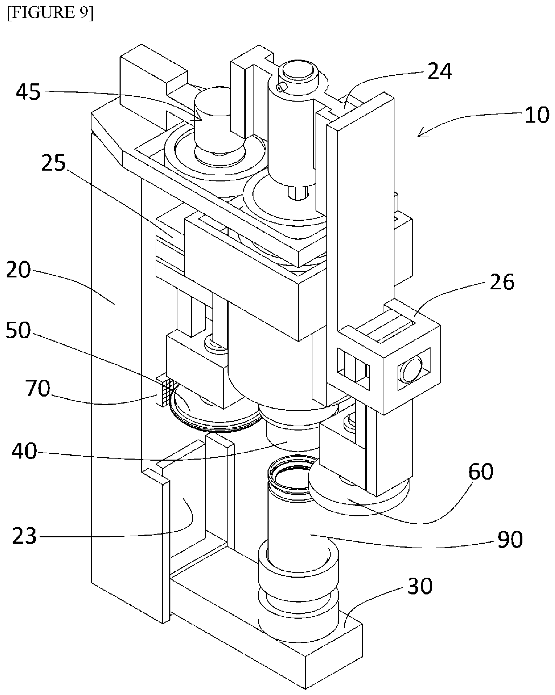

As shown in FIGS. 9 to 12, the processing surface 53 of the beading knife 52 returned to the standby position p1 presses the pressure sensor 70. Accordingly, the pressure sensor 70 provides a plurality of pressure profiles, arranged along the widthwise direction x and measured along the vertical direction y as shown in FIG. 13, as electrical signals to the monitoring unit 80.

The monitoring unit 80 extracts the profile with the highest pressure intensity among the plurality of pressure profiles, and generates profile information of the processing surface of the processing tool 50 from the same. The wear level of the processing tool 50 is then determined from the same.

In the can processing method, the pressure distribution is measured using an electronic pressure-sensitive paper 71.

According to the embodiment, since the pressure sensor 70 is pressed by the outer circumferential surface of the processing tool 50 stationary at the standby position p1, damage to the pressure sensor 70 may be prevented. Furthermore, since the direction in which the processing tool 50 returns to the standby position p1 is perpendicular to the surface of the electronic pressure-sensitive paper 71, the service life of the electronic pressure-sensitive paper may be further extended.

According to the embodiment, since the profile of the processing surface of the processing tool is detected to monitor the wear level after each processing operation on the can, the processing defect rate may be further reduced and the monitoring operation does not delay the processing at all.

Furthermore, since the monitoring method may be additionally applied to conventional inspection methods without any disruption or influence, defect inspection that cannot be performed with vision alone and also verification of the vision itself are possible.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A can processing device plastically processing an axial edge of a side wall member of a cylindrical can of a secondary battery, the can processing device comprising:
a can table where the can is rotatably installed about an center axis thereof;
a processing tool rotatably installed about a predetermined rotation center and movable toward or away from the can installed on the can table, the processing tool provided with a processing surface around the rotation center;
a pressure sensor pressed by the processing surface and measuring a pressure distribution; and
a monitoring unit generating information related to a profile of the processing surface from the pressure distribution.

2. The can processing device of claim 1, wherein the processing tool moves from a standby position to a processing position for processing the can and retracts from the processing position to the standby position, and
the pressure sensor is installed at a position where the pressure sensor is pressed by the processing surface when the processing tool is in the standby position.

3. The can processing device of claim 2, wherein the processing tool is disposed between the can and the pressure sensor.

4. The can processing device of claim 1, wherein the pressure sensor comprises an electronic pressure-sensitive paper measuring the pressure distribution in real time and quantifying and visualizing the pressure distribution as numerical data.

5. The can processing device of claim 4, wherein the electronic pressure-sensitive paper provides a two-dimensional pressure-sensitive surface and outputs a two-dimensional pressure distribution detected on the two-dimensional pressure-sensitive surface.

6. The can processing device of claim 5, wherein the two-dimensional pressure-sensitive surface intersects a moving direction of the processing tool.

7. The can processing device of claim 5, wherein the monitoring unit extracts a maximum pressure distribution among pressure distributions arranged in a direction parallel to the rotation center of the processing tool and generates the information related to the profile of the processing surface.

8. The can processing device of any one of claims 1 to 7, wherein the processing tool comprises a beading knife for processing beads on a side surface of the side wall member.

9. The can processing device of claim 8, further comprising a head gripping a front end of the side wall member of the can.

10. The can processing device of claim 9, further comprising a support roller provided opposite to the beading knife with the head interposed therebetween.

11. The can processing device of any one of claims 1 to 7, wherein the processing tool comprises a crimping roller processing a crimped portion at a front end of the side wall member.

12. A can processing method comprising:
bringing a processing tool in a standby position close to a can;
plastically deforming the can in a circumferential direction of the can to performing a forming process by rotating the can and the processing tool in rolling motion while applying pressure radially inward to the can by the processing tool;
returning the processing tool to the standby position after the forming process is completed;
measuring a pressure distribution by applying pressure to a pressure sensor with a processing surface provided on a circumferential surface of the processing tool in the standby position; and
generating profile information of the processing surface of the processing tool based on the pressure distribution and determining a wear level of the processing tool based on the profile information.

13. The can processing method of claim 12, wherein the pressure distribution is measured by an electronic pressure-sensitive paper.

14. The can processing method of claim 13, wherein a maximum pressure distribution among pressure distributions arranged in a direction parallel to a rotation center of the processing tool is extracted to generate information related to a profile of the processing surface, and the wear level is determined based on the information.
